Europäisches Patentamt

European Patent Office

Office européen des brevets

(19)

(11) Numéro de publication: **0 012 081**
**B1**

(12) **FASCICULE DE BREVET EUROPEEN**

(45) Date de publication du fascicule du brevet: **23.11.83**

(51) Int. Cl.³: **B 65 G 49/06**

(21) Numéro de dépôt: **79400928.2**

(22) Date de dépôt: **28.11.79**

(54) Dispositif de manutention pour le chargement et le déchargement de plaques, particulièrement de plaques de verre.

(30) Priorité: **28.11.78 IT 3026278**

(43) Date de publication de la demande:
**11.06.80 Bulletin 80/12**

(45) Mention de la délivrance du brevet:
**23.11.83 Bulletin 83/47**

(84) Etats contractants désignés:
**AT BE CH DE FR GB IT LU NL SE**

(56) Documents cités:
**DE - A - 2 160 765**
**US - A - 3 774 783**
**US - A - 4 093 083**

(73) Titulaire: **SAINT-GOBAIN INDUSTRIES Société anonyme dite:**
**62, boulevard Victor Hugo B.P. 124**
**F-92209 Neuilly-sur-Seine (FR)**

(72) Inventeur: **Giusti, Luciano**
**Viale Mameli 31**
**I-57100 Livourne (IT)**
Inventeur: **Ulivi, Moreno**
**Via del Marmigliaio 34**
**I-56100 Pise (IT)**

(74) Mandataire: **Brot, Philippe**
**CABINET BROT 83, rue d'Amsterdam**
**F-75008 Paris (FR)**

Courier Press, Leamington Spa, England.

Dispositif de manutention pour le chargement et le
déchargement de plaques, particulièrement de plaques de verre

La présente invention concerne un dispositif de manutention conçu pour charger des plaques et particulièrement des plaques de verre sur un transporteur horizontal ou pour les en décharger.

Les plaques de verre doivent généralement subir divers traitements à chaud, dans des machines appropriées à fonctionnement continu. Pour cela, elles doivent être placées une par une sur un transporteur horizontal qui les insère dans la chaîne de traitement, et à la fin du traitement elles doivent être prélevées sur un transporteur et déposées sur une étagère.

Par le brevet US 4 093 083 on connaît déjà un dispositif de manutention destiné à charger ou à décharger sur un transporteur horizontal des plaques de verre empilées sensiblement verticalement. Ce dispositif de manutention comprend un dispositif à ventouses qui est porté par une partie soumise à un mouvement autour d'un axe horizontal, effectuant ainsi le transfert des plaques entre la pile de plaques et le transporteur. Pour le positionnement du dispositif à ventouses par rapport à la face verticale de la pile, il est prévu de monter ce dernier sur un transporteur mobile par rapport à la pile de plaques.

L'inconvénient d'un tel système de positionnement réside dans le fait que le transporteur doit être constamment rapproché de la pile de plaques à mesure que l'épaisseur de celle-ci diminue.

La présente invention a pour objet de remédier à cet inconvénient et concerne à cet effet un dispositif de manutention du type de celui décrit dans le brevet U.S. 4 093 083 susmentionné et qui se caractérise en ce que ladite partie portant le dispositif à ventouses est constituée par un tambour tournant autour de l'axe horizontal qui porte radialement à sa périphérie les dispositifs à ventouses, et qui est solidaire d'un chariot mobile se déplaçant avec un mouvement de translation entre les courroies d'entraînement d'un transporteur fixe, le chariot étant muni lui aussi de courroies d'entraînement, disposées sensiblement dans le prolongement des courroies du transporteur de manière à constituer avec ces dernières une structure continue de transport, lesdits moyens de positionnement des dispositifs à ventouses étant constitués par un galet basculant disposé sur le chariot, en contact avec la pile et commandé par un vérin pneumatique susceptible de positionner le tambour par rapport à la pile, les ventouses étant articulées sur ledit tambour de manière à ce qu'elles puissent être orientées au cours de la rotation de ce dernier, leur position angulaire étant définie par des cames de positionnement appropriées.

Grâce au dispositif de positionnement selon l'invention, le transporteur peut conserver une position fixe par rapport à la pile de plaues. Le galet palpeur, maintenu en contact avec la pile de plaques, détecte l'épaisseur de la pile de plaques et règle de ce fait la position du tambour à la position voulue en fonction de cette épaisseur de façon que la plaque qui est portée par une ventouse, se pose exactement sur la pile ou, inversement, que la ventouse entre en contact exactement avec la première plaque à prélever.

Un mode de réalisation préférentiel de l'invention sera à présent décrit en détail, à titre d'exemple non limitatif, en regard des dessins annexés sur lesquels:

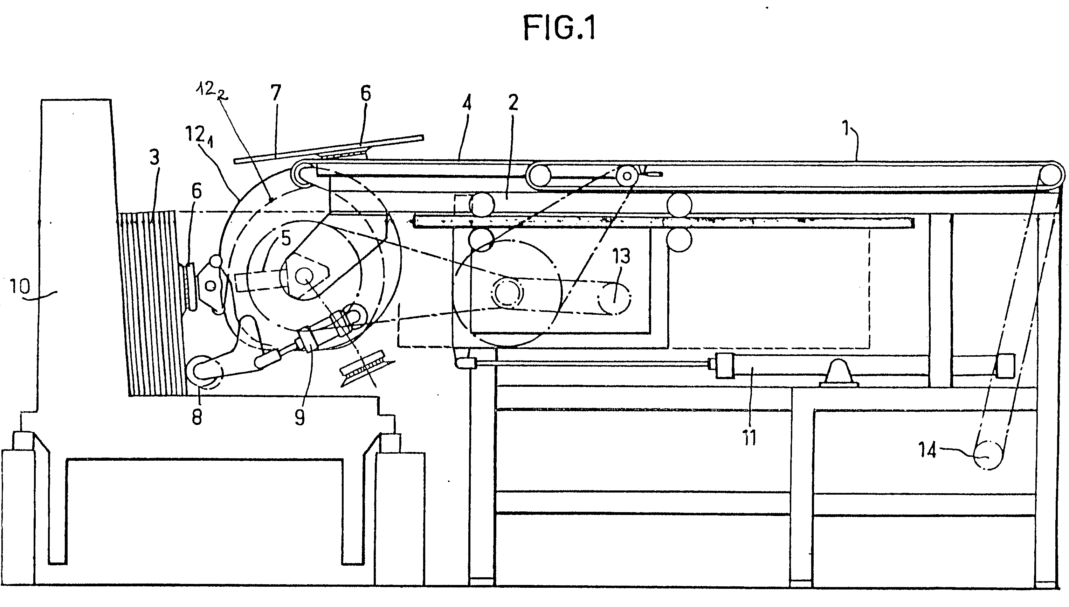

La figure 1 est une vue en élévation schématique du dispositif de manutention, et

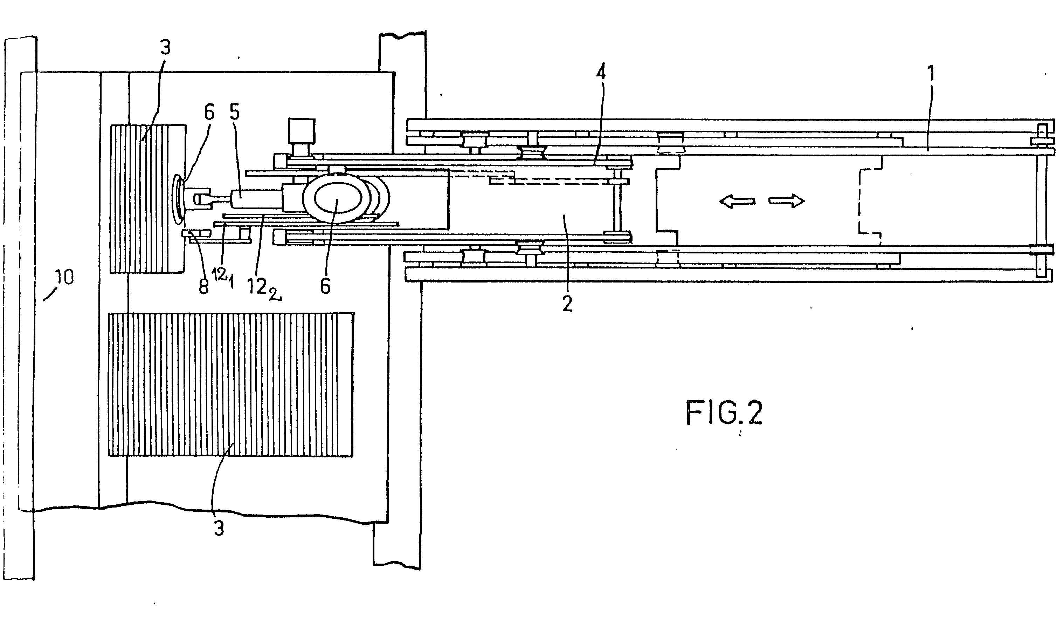

La figure 2 montre le même dispositif, vu en plan.

Comme le montrent les dessins, le dispositif de manutention selon l'invention comprend essentiellement un transporteur fixe à courroies 1 est un chariot mobile 2 dont la course totale est toujours supérieure à l'épaisseur de la pile de plaques 3 à charger ou à décharger.

Le chariot mobile se compose à son tour d'un transporteur à courroies 4 pouvant coulisser à l'intérieur du transporteur fixe susdit et d'une partie tournante 5 à axe horizontal, munie radialement de dispositifs à ventouses 6, de préférence au nombre de trois, servant à prendre les différentes plaques 7.

Sur le chariot mobile est monté solidairement un galet palpeur basculant 8 commandé par un vérin pneumatique 9 qui positionne chaque fois la partie tournante 5 relativement à l'étagère 10 portant les plaques 3 à charger ou à décharger. Le chariot mobile est maintenu au moyen d'un piston 11 contre la pile de plaques posées sur l'étagère.

Lesdites ventouses 6 sont articulées et leur position relative, pendant la rotation du tambour 5, est déterminée par deux cames de positionnement $12_1$, $12_2$.

La rotation du tambour est commandée par un moteur à variateur de vitesse 13 qui actionne aussi le transporteur mobile 4, tandis que le transporteur fixe 1 est actionné par un deuxième moteur à variateur de vitesse 14.

En pratique, si l'on utilise le dispositif de manutention pour charger, les plaques 7 sont prélevées une à une d'une pile 3 et déposées une à une sur le transporteur horizontal 4 qui les insère dans la chaîne de traitement.

Inversement, si le dispositif est utilisé pour décharger, les pièces 7 sont prélevées sur le transporteur 4 et déposées sur l'étagère 10 de manière à former la pile 3.

Ainsi, le chargement des plaques de verre sur un transporteur horizontal ou leur déchargement au moyen du dispositif selon l'invention se fait sans difficulté.

## Revendications

1. Dispositif de manutention du type destiné à charger sur un transporteur horizontal (1), ou à décharger de celui-ci, des plaques (7) de verre empilées en position sensiblement verticale, au moyen d'un dispositif à ventouses (6) qui est porté par une partie soumise à un mouvement autour d'un axe horizontal, effectuant ainsi le transfert des plaques entre la pile (3) de plaques et le transporteur, des moyens de positionnement des ventouses par rapport à la face verticale de la pile étant prévus, caractérisé en ce que ladite partie portant le dispositif à ventouses est constituée par un tambour (5) tournant autour de l'axe horizontal, qui porte radialement à sa périphérie les dispositifs à ventouses (6), et qui est solidaire d'un chariot mobile (2) se déplaçant avec un mouvement de translation entre les courroies d'entraînement d'un transporteur fixe (1), le chariot étant muni lui aussi de courroies d'entraînement (4) disposées sensiblement dans le prolongement des courroies du transporteur (1) de manière à constituer avec ces dernières une structure continue de transport, lesdits moyens de positionnement des dispositifs à ventouses étant constitués par un galet basculant (8) disposé sur le chariot (2), en contact avec la pile (3) et commandé par un vérin pneumatique (9) susceptible de positionner le tambour (5) par rapport à la pile (3), les ventouses étant articulées sur ledit tambour de manière à ce qu'elles puissent être orientées au cours de la rotation de ce dernier, leur position angulaire étant définie par des cames de positionnement (12₁, 12₂) appropriées.

2. Dispositif selon la revendication 1, caractérisé en ce que la course totale du chariot mobile (2) est supérieure à l'épaisseur de la pile de plaques (3) à charger ou à décharger.

3. Dispositif selon l'une des revendications précédentes, caractérisé en ce qu'il comporte un premier moteur à variateur de vitesse (13) pour l'entraînement du tambour (5) et du chariot mobile (2), et un second moteur à variateur de vitesse (14) pour l'entraînement du transporteur fixe (1).

## Patentansprüche

1. Vorrichtung zum Aufladen von Glasscheiben (7) auf einen Horizontalförderer (1) bzw. zum Abnehmen der Glasscheiben (7) von diesem Förderer (1), wobei die Glasscheiben in einem Stapel in im wesentlichen vertikaler Lage angeordnet sind bzw. werden, mit Hilfe einer mit Saugnäpfen (6) ausgestatteten Einrichtung, die von einem Teil getragen ist, der um eine Horizontalachse in Bewegung versetzt wird und auf diese Weise das Überführen der Scheiben zwischen dem Scheibenstapel (3) und dem Förderer bewirkt, und mit einer Einrichtung zum Positionieren der Saugnäpfe bezüglich der Vertikalseite des Stapels, dadurch gekennzeichnet, daß der die mit Saugnäpfen ausgestattete Einrichtung tragende Teil durch eine Trommel (5) gebildet ist, die sich um die Horizontalachse dreht, radial an ihrem Umfang die Saugnäpfe (6) trägt und mit einem beweglichen Wagen (2) fest verbunden ist, der zwischen Förderbändern des ortsfest angeordneten Förderers (1) in eine Translationsbewegung versetzbar ist, wobei der Wagen ebenfalls mit Förderbändern (4) ausgestattet ist, die im wesentlichen in Verlängerung der Förderbänder des Förderers (1) so angeordnet sind, daß sie mit diesen letzteren eine kontinuierliche Transportanordnung bilden, daß die Positioniereinrichtung der Saugnäpfe durch eine auf dem Wagen (2) angeordnete Schwenkrolle (8) gebildet ist, die mit dem Stapel (3) in Berührung steht und durch einen Pneumatikzylinder (9) gesteuert ist, mit welchem die Trommel (5) bezüglich des Stapels (3) positionierbar ist, und daß die Saugnäpfe an der Trommel schwenkbar angeordnet sind, so daß sie während der Trommeldrehung orientierbar sind, wobei ihre Winkellage durch geeignete Positionier-Steuerkurven (12₁, 12₂) bestimmt wird.

2. Vorrichtung nach Anspruch 1, dadurch gekennzeichnet, daß der Gesamtweg des beweglichen Wagens (2) größer als die Dicke des Stapels (3) der aufzuladenden bzw. abgenommenen Platten ist.

3. Vorrichtung nach einem der vorhergehenden Ansprüche, dadurch gekennzeichnet, daß sie einen ersten Motor (13) mit veränderlicher Geschwindigkeit für den Antrieb der Trommel (5) und des beweglichen Wagens (2) aufweist, und einen zweiten Motor (14) mit veränderlicher Geschwindigkeit für den Antrieb des ortsfesten Förderers (1).

## Claims

1. A handling device of the type intended for loading on to a horizontal transporter (1), or unloading therefrom, glass plates (7) stacked in a substantially vertical position, by means of a suction-cup device (6) which is carried by a part subjected to a movement about a horizontal axis, thus effecting transfer of the plates between the stack (3) of plates and the transporter, means for positioning the suction-cups with respect to the vertical face of the stack being provided, characterized in that said part carrying the suction-cup device is formed by a drum (5) rotating about the horizontal axis, which carries radially at its periphery the suction-cup device (6) and which is integral with a mobile carriage (2) moving with a translational movement between the drive belts of a fixed transporter (1), the carriage being also provided with drive belts (4) disposed substantially in the extension of the belts of the transporter (1) so as to form therewith a continous transport structure, said means for positioning the suction-cup device being formed by a swivelling roller (8) disposed on the carriage (2), in contact with the stack (3) and controlled by a pneumatic cylinder (9) capable of positioning the drum (5) with respect to the stack (3), the suction-cups being hinged about said drum so that they may be orientated during rotation thereof, their angular position being defined by appropriate positioning cams ($12_1$, $12_2$).

2. The device according to claim 1, characterized in that the total travel of the mobile carriage (2) is greater than the thickness of the stack of plates (3) to be loaded or unloaded.

3. The device according to one of the preceding claims, characterized in that it comprises a first motor with speed variator (13) for driving the drum (5) and the mobile carriage (2) and a second motor with speed variator (14) for driving the fixed transporter (1).

FIG.1

0012081

FIG.2